# EUROPEAN PATENT APPLICATION

(11) **EP 4 782 639 A1**
(43) Date of publication of application: **29.07.2026**
(21) Application number: 26151836.9
(22) Date of filing: 14.01.2026
(51) Int. Cl.: E05D 15/06, E05F 15/635

(54) **SLIDING DOOR DEVICE**

(30) Priority: 27.01.2025 JP 2025011304
(71) Applicant: Alps Alpine Co., Ltd., Ota-ku, Tokyo 145-8501 (JP)
(72) Inventor: Shirashima, Hitoshi, Iwaki-city Fukushima (JP)
(74) Representative: Schmitt-Nilson Schraud Waibel Wohlfrom Patentanwälte Partnerschaft mbB

(57) **Abstract**

A sliding door device includes a support part provided with a rear door, a front door, and a drive mechanism to independently slide the rear door and the front door, wherein the drive mechanism sets a closed mode, a first open mode, and a second open mode, the rear door is provided with a rear outer abutment and a rear inner abutment spaced apart in a sliding direction, the front door is provided with a front outer abutment and a front inner abutment spaced apart in the sliding direction, the support part is provided with one or more guide parts extending in the sliding direction, the rear outer abutment and the front inner abutment move along a same guide part among the one or more guide parts, and the front outer abutment and the rear inner abutment move along a same guide part among the one or more guide parts.

## Description

The present application is based on and claims priority to Japanese patent application no. 2025-011304 filed on January 27, 2025, with the Japan Patent Office.

The disclosures herein relate to sliding door devices in which a rear door and a front door are arranged one behind the other and slide relative to each other.

Patent Literature (PTL) 1 discloses a vehicle-mounted device equipped with a monitor. The monitor is provided with a display member holder, a display member, and a tilt mechanism which inclines the display member laterally with respect to the display member holder. In the tilt mechanism, abutments are provided on the left and right sides of the rear surface of the display member, and inclined surfaces are provided on the left and right sides of the display member holder. The display member moves laterally so that the abutment of the display member is along the inclined surface of the display member holder. When the display member moves to the limit, the abutment provided on the display member abuts on the flat surface of the display member holder, and the flat surface acts as a stopper to stop the display member, and the inclined state of the display member is maintained by a load of a load member including a gear.

As described in PTL 1, in order to move the display member laterally and maintain a stopped state, a guide member for guiding the display member laterally and a stopper part for maintaining a state in which the display member is moved in either a left or right direction are required, and these members occupy a large space behind the display member. The present disclosure relates to a sliding door device in which a rear door and a front door are stacked in front of each other and slide, but in a door device in which two doors are movably provided, it is necessary to provide the guide member and the stopper part separately behind each door, and two sets of the guide member and the stopper part are provided in total. Therefore, a larger space is required behind each door. Further, in order to maintain the rear door and the front door independently in a stopped state by the stopper part, a stopper part having a complicated structure is required.

The present disclosure aims to provide a sliding door device in which a space occupied by a guide part for sliding the rear door and the front door can be minimized and the stopped state of the rear door and the front door can be reliably maintained by the stopper part having a simple structure.

### CITATION LIST

### PATENT LITERATURE

[PTL 1] Japanese Laid-Open Patent Publication no. 2019-212943

The present disclosure relates to a sliding door device according to the appended claims. Embodiments are disclosed in the dependent claims.

A sliding door device according to an aspect includes a support part provided with a rear door configured to slide, a front door configured to slide in front of the rear door, and a drive mechanism configured to independently slide the rear door and the front door, wherein the drive mechanism is configured to set a closed mode in which the rear door moves in a first direction and the front door moves in a second direction, which is opposite to the first direction, a first open mode in which the front door overlaps the rear door that has moved in the first direction, and a second open mode in which the rear door overlaps the front door that has moved in the second direction, the rear door is provided with a rear outer abutment and a rear inner abutment spaced apart in a sliding direction, the front door is provided with a front outer abutment and a front inner abutment spaced apart in the sliding direction, the support part is provided with one or more guide parts extending in the sliding direction, the rear outer abutment and the front inner abutment are configured to move along a same guide part among the one or more guide parts, and the front outer abutment and the rear inner abutment are configured to move along a same guide part among the one or more guide parts.

In the sliding door device of the present disclosure, since the rear outer abutment and the front inner abutment move along the same guide part, and the front outer abutment and the rear inner abutment move along the same guide part, it is not necessary to separately provide the guide part for the front door and the guide part for the rear door, and the space occupied by the guide part at the rear of each door can be narrowed, and the sliding door device can be configured to be thin.

For example, since the front outer abutment is pressed against the rear inner abutment in the first open mode, and the rear outer abutment is pressed against the front inner abutment in the second open mode, it is not necessary to provide a complicated stopper structure, and the front door and the rear door can be maintained in a stopped state in the open mode.

### BRIEF DESCRIPTION OF THE DRAWINGS

FIG. 1 is a perspective view illustrating a sliding door device according to a first embodiment of the present disclosure in a closed mode, viewed from the front;
FIG. 2 is a perspective view illustrating the sliding door device according to the first embodiment of the present disclosure in the closed mode, viewed from the rear;
FIG. 3 is a perspective view illustrating a relative position of a rear door and a front door of the sliding door device according to the first embodiment of the present disclosure in the closed mode, viewed from the rear;
FIG. 4 is a bottom view of the sliding door device according to the first embodiment of the present disclosure in the closed mode, in which the front is oriented downward in the drawing;
FIG. 5A is a partial cross-sectional view illustrating the sliding door device according to the first embodiment of the present disclosure in the closed mode, corresponding to a right-hand portion R shown in FIG. 3, taken along a line 5A-5A;
FIG. 5B is a partial cross-sectional view illustrating the sliding door device according to the first embodiment of the present disclosure in the closed mode, corresponding to a central portion C shown in FIG. 3, taken along a line 5B-5B;
FIG. 5C is a partial cross-sectional view illustrating the sliding door device according to the first embodiment of the present disclosure in the closed mode, corresponding to a left-hand portion L shown in FIG. 3, taken along a line 5C-5C;
FIG. 6 is a perspective view illustrating the sliding door device according to the first embodiment of the present disclosure in a first open mode, viewed from the front;
FIG. 7 is a perspective view illustrating the relative positions of the rear door and the front door of the sliding door device according to the first embodiment of the present disclosure in the first open mode, viewed from the rear;
FIG. 8 is a bottom view of the sliding door device according to the first embodiment of the present disclosure in the first open mode, in which the front is oriented downward in the drawing;
FIG. 9A is a partial cross-sectional view illustrating the sliding door device according to the first embodiment of the present disclosure in the first open mode, corresponding to a right-hand portion R shown in FIG. 7, taken along a line 9A-9A;
FIG. 9B is a partial cross-sectional view illustrating the sliding door device according to the first embodiment of the present disclosure in the first open mode, corresponding to a central portion C shown in FIG. 7, taken along a line 9B-9B;
FIG. 10 is a perspective view illustrating the sliding door device according to the first embodiment of the present disclosure in a second open mode, viewed from the front;
FIG. 11 is a perspective view illustrating the relative positions of the rear door and the front door of the sliding door device according to the first embodiment of the present disclosure in the second open mode, viewed from the rear;
FIG. 12 is a bottom view of the sliding door device according to the first embodiment of the present disclosure in the second open mode, in which the front is oriented downward in the drawing;
FIG. 13A is a partial cross-sectional view illustrating the sliding door device according to the first embodiment of the present disclosure in the second open mode, corresponding to a left-hand portion L shown in FIG. 11, taken along a line 13A-13A;
FIG. 13B is a partial cross-sectional view illustrating the sliding door device according to the first embodiment of the present disclosure in the second open mode, corresponding to a central portion C shown in FIG. 11, taken along a line 13B-13B;
FIG. 14 is a partially exploded perspective view illustrating the rear door and the front door in the sliding door device according to the first embodiment of the present disclosure, shown separated from each other and viewed from the rear;
FIG. 15 is a perspective view illustrating a support part used in the sliding door device according to the first embodiment of the present disclosure viewed from the front;
FIG. 16 is a partially exploded perspective view illustrating the rear door and the front door and the support part used in the sliding door device according to the first embodiment of the present disclosure viewed from below;
FIG. 17A is a partial cross-sectional view illustrating the sliding door device according to the first embodiment of the present disclosure shown in FIG. 2, taken along a line 17A-17A;
FIG. 17B is a partial cross-sectional view illustrating the sliding door device according to the first embodiment of the present disclosure shown in FIG. 2, taken along a line 17B-17B;
FIG. 18A is a perspective view illustrating a shape of the rear outer abutment and the rear inner abutment used in the sliding door device according to the first embodiment of the present disclosure;
FIG. 18B is a perspective view illustrating a shape of the front outer abutment and the front inner abutment used in the sliding door device according to the first embodiment of the present disclosure;
FIG. 19A is a drawing illustrating an operation of a sliding door device according to a second embodiment of the present disclosure in a closed mode;
FIG. 19B is a drawing illustrating an operation of the sliding door device according to the second embodiment of the present disclosure in a first open mode;
FIG. 19C is a drawing illustrating an operation of the sliding door device according to the second embodiment of the present disclosure in a second open mode;
FIG. 20A is a perspective view illustrating an abutment and a stopper part used in a sliding door device according to a third embodiment of the present disclosure when a projection and a recess have a tapered shape with a circular cross-section;
FIG. 20B is a perspective view illustrating an abutment and a stopper part used in the sliding door device according to the third embodiment of the present disclosure when the projection and the recess have a tapered shape with a rectangular cross-section;
FIG. 21 is a drawing illustrating the sliding door device according to the third embodiment of the present disclosure;
FIG. 22A is a drawing illustrating an operation of the sliding door device according to the third embodiment of the present disclosure in a closed mode;
FIG. 22B is a drawing illustrating the operation of the sliding door device according to the third embodiment of the present disclosure in a first open mode;
FIG. 22C is a drawing illustrating the operation of the sliding door device according to the third embodiment of the present disclosure in a second open mode;
FIG. 23 is a drawing illustrating a sliding door device according to a fourth embodiment of the present disclosure;
FIG. 24A is a drawing illustrating an operation of the sliding door device according to the fourth embodiment of the present disclosure in a closed mode;
FIG. 24B is a drawing illustrating the operation of the sliding door device according to the fourth embodiment of the present disclosure in a first open mode; and
FIG. 24C is a drawing illustrating the operation of the sliding door device according to the fourth embodiment of the present disclosure in a second open mode.

### <FIRST EMBODIMENT>

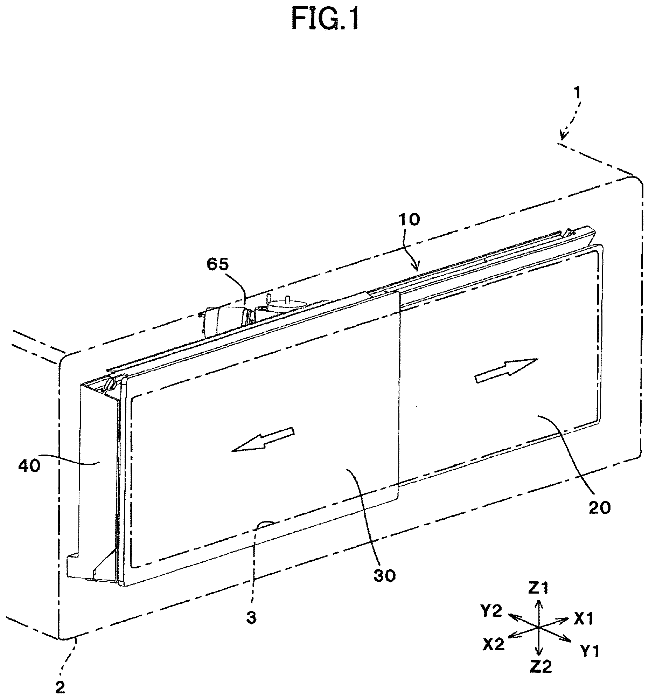

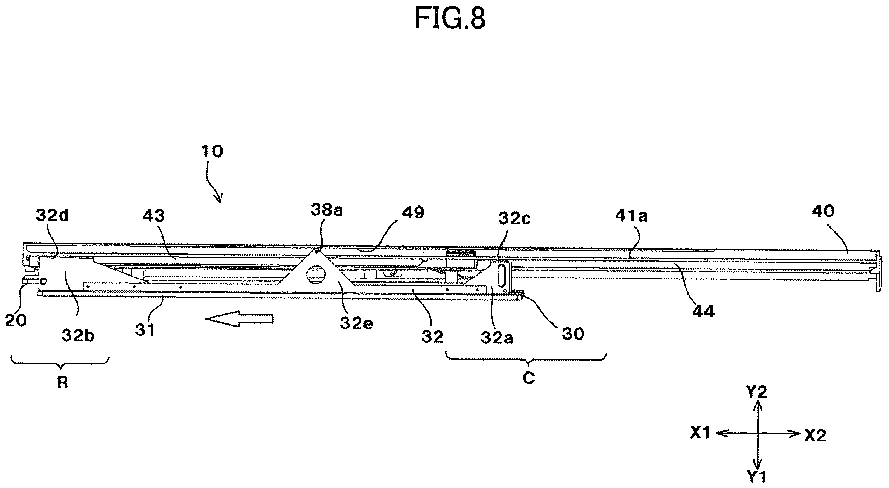

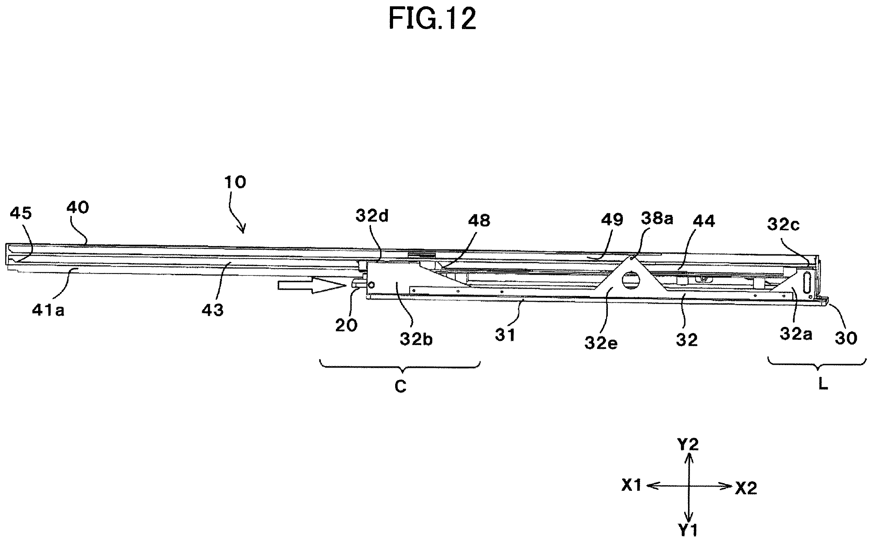

FIGS. 1 to 18 are drawings illustrating a sliding door device according to a first embodiment of the present disclosure.

### (STRUCTURE OF SLIDING DOOR DEVICE)

FIG. 1 shows a vehicle-mounted device 1. The vehicle-mounted device 1 is embedded in a front dashboard or an instrument panel in a vehicle interior of an automobile or is formed seamlessly with the dashboard or the instrument panel. The vehicle-mounted device 1 includes a sliding door device 10 according to the first embodiment of the present disclosure. The sliding door device 10 is not limited to the vehicle-mounted device 1 and can be mounted in various devices for use other than the vehicle-mounted device.

In the sliding door device 10, a direction X1-X2 is a right-left direction, an X1 direction is a right direction and a first direction, and an X2 direction is a left direction and a second direction. The direction X1-X2 is a sliding direction of the rear door and the front door. A direction Y1-Y2 is a front-rear direction, a Y1 direction is a front direction, and a Y2 direction is a rear direction. A direction Z1-Z2 is a top-bottom direction, a Z1 direction is a top direction, and a Z2 direction is a bottom direction.

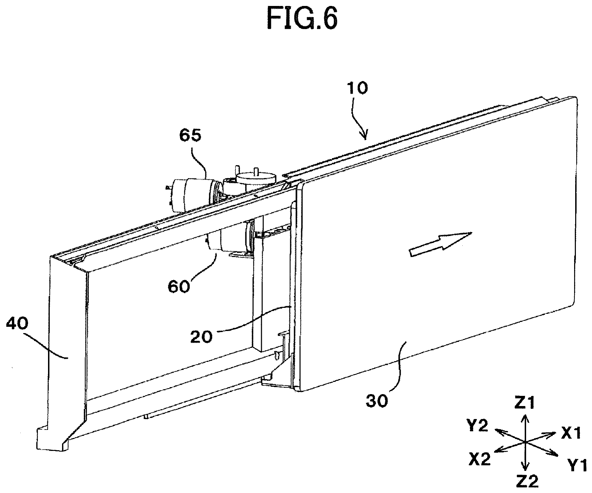

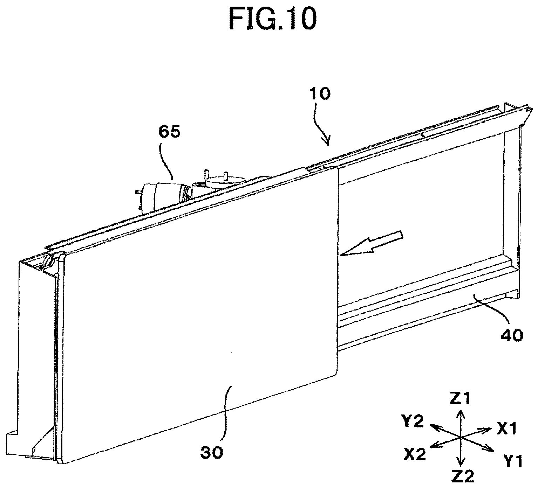

As shown in FIG. 1, the vehicle-mounted device 1 has a housing 2, and the housing 2 is provided with an opening 3 released toward the front (Y1 direction). The sliding door device 10 is provided with a rear door 20 and a front door 30, wherein the rear door 20 slides in the right-left direction (X1-X2 direction) and the front door 30 slides in the right-left direction in front of the rear door 20 (Y1 direction). In the closed mode shown in FIG. 1, the opening 3 is closed by the rear door 20 and the front door 30. In the first open mode shown in FIG. 6 and the second open mode shown in FIG. 10, a part of the opening 3 is released and the internal space of the housing 2 can be accessed.

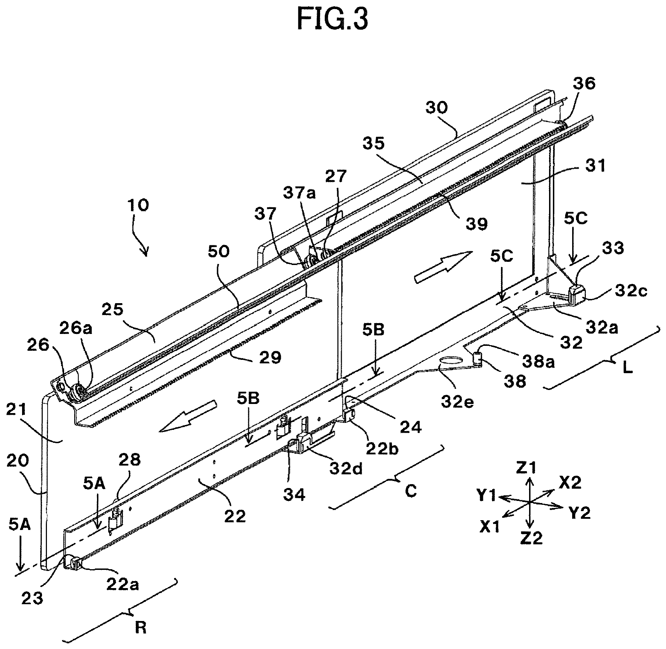

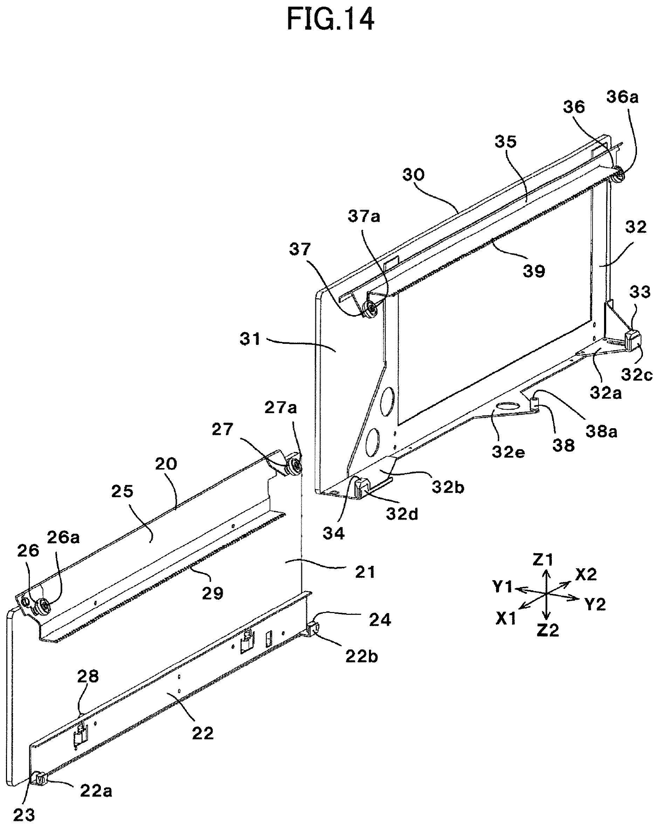

FIGS. 3 and 14 show a structure of the rear door 20 and the front door 30 as viewed from the rear. The rear door 20 has a rear door main body 21, and the front door 30 has a front door main body 31. The rear door main body 21 and the front door main body 31 are display panels such as a liquid crystal display panel and an electroluminescent panel, and substantially the entire front surface facing the front (Y1 direction) of each door main body is a display screen. Further, only a part of the front surface of the rear door main body 21 and the front door main body 31 may be used as a display area, or the rear door main body 21 and the front door main body 31 may be provided with no display function, and only a door function may be provided.

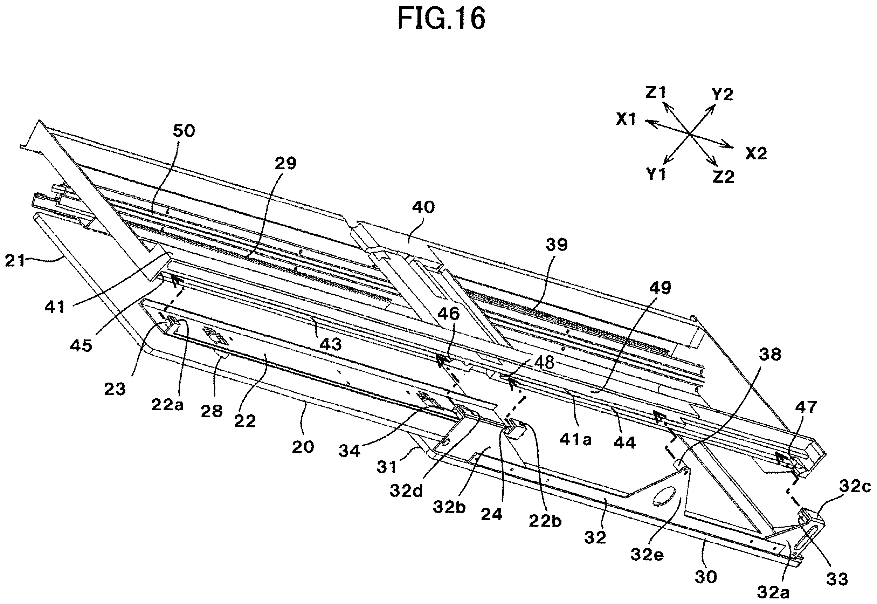

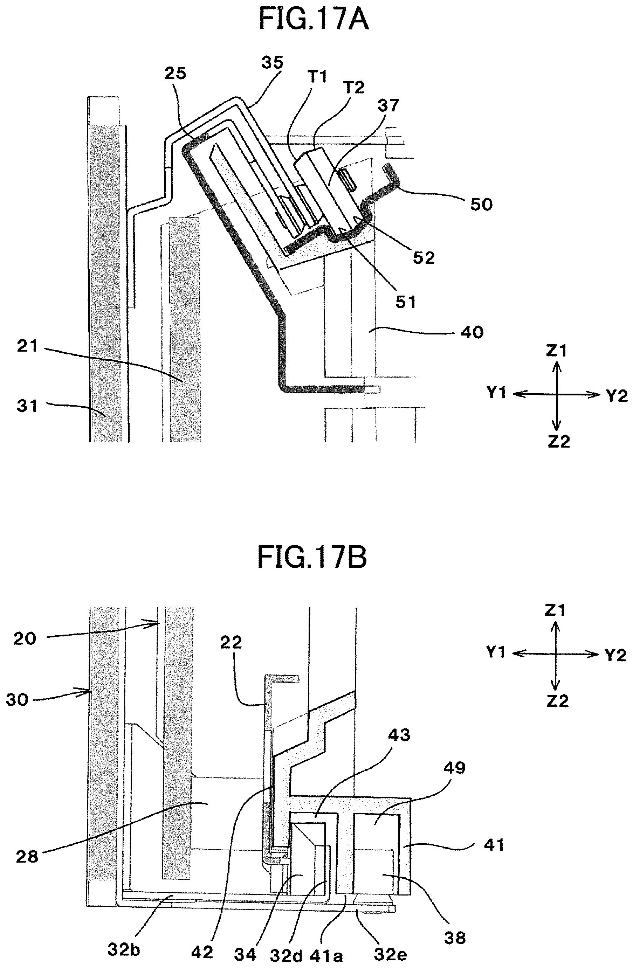

As shown in FIG. 14, in the rear door 20, a slide bracket 22 extending in the right-left direction (X1-X2 direction) is fixed to a lower part of the rear surface of the rear door main body 21. As shown in FIGS. 16 and 17B, a spacer 28 extending rearward (Y2 direction) is fixed between the rear surface of the rear door main body 21 and the slide bracket 22, and the slide bracket 22 is fixed at a position slightly separated rearward (Y2 direction) from the rear surface of the rear door main body 21. The slide bracket 22 is provided with a support piece 22a having a portion on an X1 side that extends rearward and is bent upward, and a rear outer abutment (rear outer slider) 23 is fixed to a support surface of the support piece 22a facing forward (Y1 direction) . The slide bracket 22 is provided with a support piece 22b having a portion on an X2 side that extends rearward and is bent upward, and a rear inner abutment (rear inner slider) 24 is fixed to a support surface of the support piece 22b facing forward.

As shown in FIG. 14, a roller bracket 25 is fixed to an upper portion of the rear surface of the rear door main body 21. A roller shaft 26a is fixed to an end part on the X1 side of the roller bracket 25, and an outer roller 26 is rotatably supported by the roller shaft 26a. A roller shaft 27a is fixed to an end part on the X2 side of the roller bracket 25, and an inner roller 27 is rotatably supported by the roller shaft 27a. The roller shafts 26a and 27a are not parallel to the front-rear direction (Y1-Y2 direction) but are inclined upward toward the rear (Y2 direction). Further, a rack 29 extending in the sliding direction (X1-X2 direction) is seamlessly formed with the roller bracket 25.

As shown in FIG. 14, in the front door 30, a bracket 32 is fixed to the rear surface of the front door main body 31. An outer support plate 32a extending rearward is fixed to the lower part on the X2 side of the bracket 32. A support piece 32c bent upward is formed on the outer support plate 32a, and a front outer abutment (front outer slider) 33 is fixed to a support surface facing forward (Y1 direction) of the support piece 32c. An inner support plate 32b extending rearward is fixed to the lower part on the X1 side of the bracket 32. A support piece 32d bent upward is formed on the inner support plate 32b, and a front inner abutment (front inner slider) 34 is fixed to a support surface facing forward of the support piece 32d. A roller support piece 32e extending rearward (Y2 direction) is formed at an intermediate portion in the right-left direction (X1-X2 direction) of the bracket 32. A roller shaft 38a extending vertically upward (Z1 direction) is fixed to the roller support piece 32e, and the support roller 38 is rotatably supported by the roller shaft 38a.

As shown in FIG. 14, a roller bracket 35 is fixed to an upper portion of a rear surface of the front door main body 31. A roller shaft 36a is fixed to an end part of the roller bracket 35 on the X2 side, and an outer roller 36 is rotatably supported by the roller shaft 36a. A roller shaft 37a is fixed to the X1 side end of the roller bracket 35, and an inner roller 37 is rotatably supported by the roller shaft 37a. The roller shafts 36a and 37a are not parallel to the front-rear direction (Y1-Y2 direction) but are inclined upward toward the rear (Y2 direction). As shown in FIG. 3, when the rear door 20 and the front door 30 are combined, the outer roller 26 and the inner roller 27 provided at the rear door 20 and the outer roller 36 and the inner roller 37 provided at the front door 30 are arranged in a line in the sliding direction (X1-X2 direction). Further, a rack 39 extending in the sliding direction (X1-X2 direction) is seamlessly formed with the roller bracket 35.

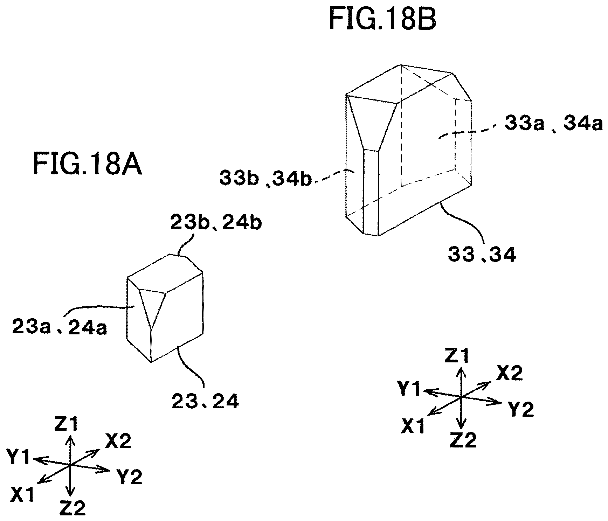

As shown in FIG. 18A, the rear outer abutment 23 and the rear inner abutment 24 provided at the rear door 20 have the same shape and are both formed of a synthetic resin material having a small friction coefficient. The rear outer abutment 23 is formed with an outwardly inclined part 23a directed in the X1 direction and an inwardly inclined part 23b directed in the X2 direction. The rear inner abutment 24 is also formed with an outwardly inclined part 24a directed in the X1 direction and an inwardly inclined part 24b directed in the X2 direction. The outwardly inclined parts 23a and 24a and the inwardly inclined parts 23b and 24b are all inclined surfaces which incline in the X2 direction toward the front (Y1 direction).

As shown in FIG. 18B, the front outer abutment 33 and the front inner abutment 34 provided on the front door 30 have the same shape and are both formed of a synthetic resin material having a small friction coefficient. The front outer abutment 33 is formed with an outwardly inclined part 33a directed in the X2 direction and an inwardly inclined part 33b directed in the X1 direction. The front inner abutment 34 is also formed with an outwardly inclined part 34a directed in the X2 direction and an inwardly inclined part 34b directed in the X1 direction. The outwardly inclined parts 33a and 34a are inclined surfaces inclined in the X1 direction toward the front (Y1 direction), and the inwardly inclined parts 33b and 34b are inclined surfaces inclined in the X2 direction toward the front.

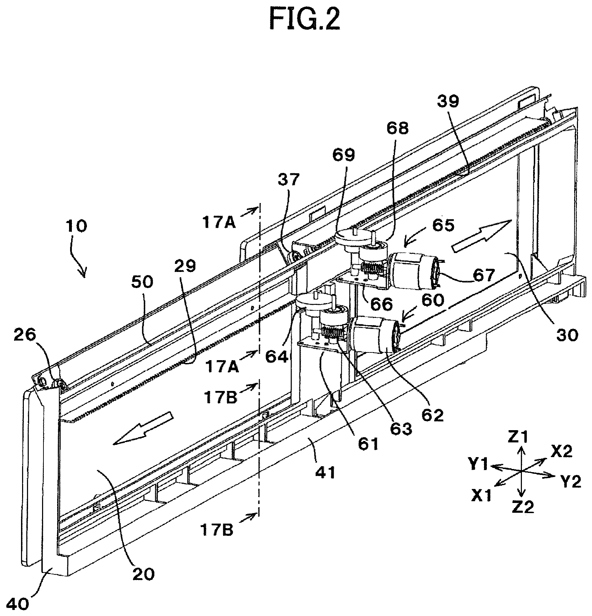

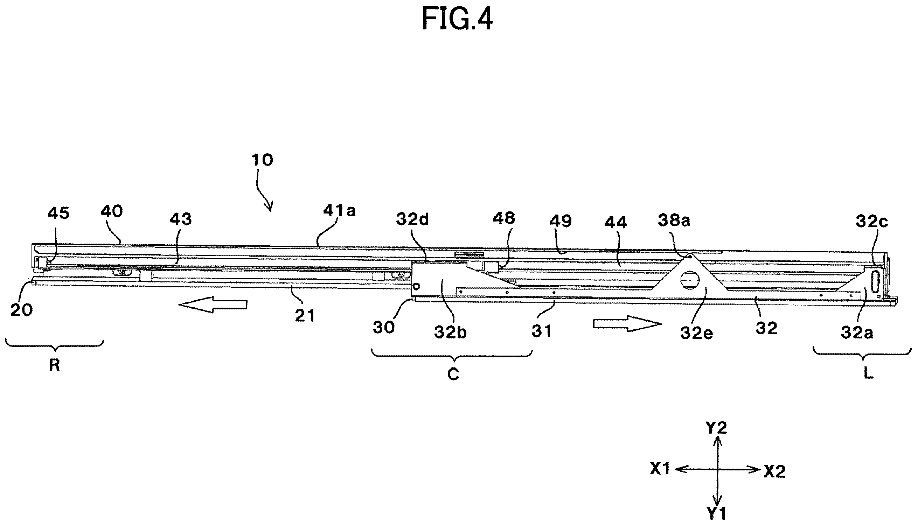

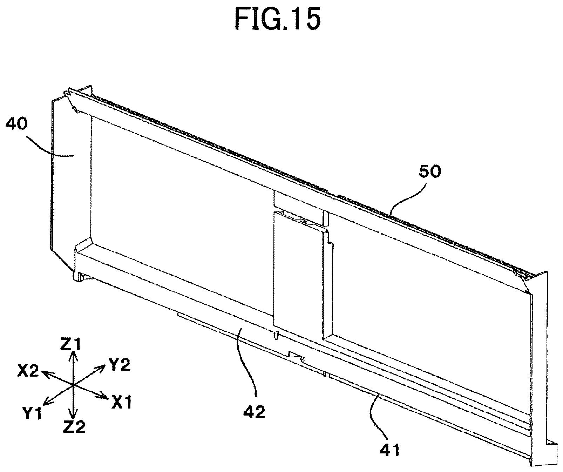

The sliding door device 10 has a support part 40, and the rear door 20 and the front door 30 are slidably supported by the support part 40. In FIG. 2, the overall structure of the sliding door device 10 is shown together with the support part 40 from the rear, while the overall structure of the sliding door device 10 is shown together with the bottom surface of the support part 40 in FIGS. 4, 8, and 12. In FIG. 15, the support part 40 as a single part is shown from the front. In FIG. 16, the support part 40 is shown from obliquely below along with the rear door 20 and the front door 30. As shown in FIG. 15, the support part 40 has a structure in which two frames arranged in a right-left direction (X1-X2 direction) are connected. The lower part of the support part 40 is a lower guide support part 41 extending in the sliding direction (X1-X2 direction). As shown in FIG. 15, the front surface (Y1 direction) of the lower guide support part 41 is a slide support surface 42 parallel to an X-Z plane.

As shown in FIG. 16, a first guide part 43 and a second guide part 44 are provided inside the lower guide support part 41 of the support part 40. The first guide part 43 and the second guide part 44 are linear grooves extending linearly in the sliding direction (X1-X2 direction) and open to a lower surface 41a of the lower guide support part 41. Alternatively, the first guide part 43 and the second guide part 44 may be elongated slots extending in the sliding direction and penetrating in the top-bottom direction (Z1-Z2 direction) in the lower guide support part 41. As shown in FIGS. 4, 8, and 12, the centers of the groove widths of the first guide part 43 and the second guide part 44 are located on the same line extending in the sliding direction (X1-X2 direction). As shown in FIG. 16, the end part on the X1 side of the linear groove forming the first guide part 43 is a first outer stopper 45, and the end part on the X2 side of the linear groove forming the first guide part 43 is a first inner stopper 46. The end part on the X2 side of the linear groove forming the second guide part 44 is a second outer stopper 47, and the end part on the X1 side of the linear groove forming the second guide part 44 is a second inner stopper 48.

The first outer stopper 45 and the first inner stopper 46 are provided spaced apart in the sliding direction (X1-X2 direction), and the second inner stopper 48 and the second outer stopper 47 are also provided spaced apart in the sliding direction. The first outer stopper 45 and the second outer stopper 47 are also provided spaced apart in the sliding direction.

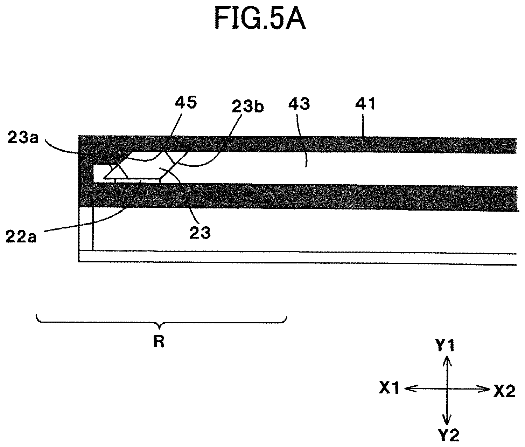

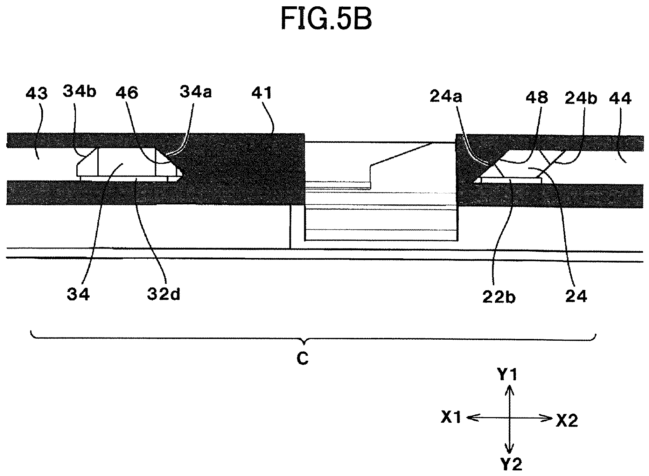

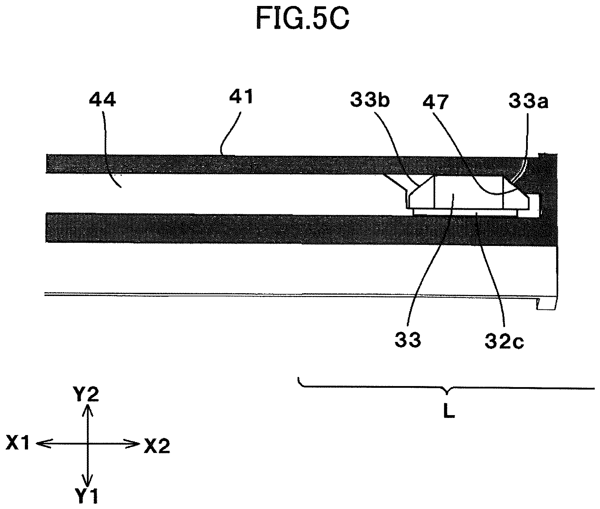

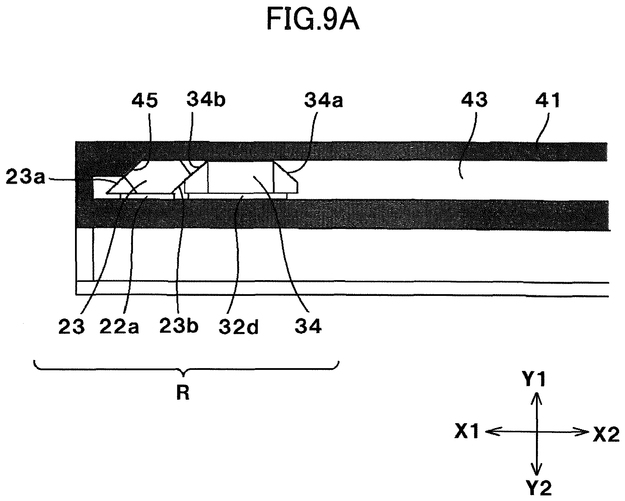

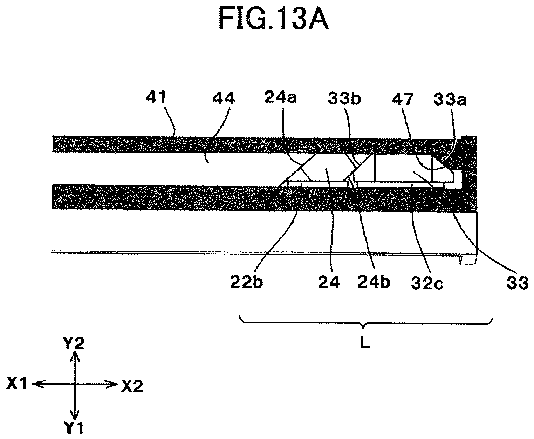

FIGS. 5A and 9A are expanded cross-sectional views illustrating a right-hand portion R of the lower guide support part 41 viewed from above. As shown in this expanded cross-sectional view, the first outer stopper 45 is an inclined stopper inclined in the X2 direction toward the front (Y1 direction). FIGS. 5C and 13A are expanded cross-sectional views of the left-hand portion L of the lower guide support part 41 as seen from above. As shown in this expanded cross-sectional view, the second outer stopper 47 is an inclined stopper inclined in the X1 direction toward the front (Y1 direction). FIGS. 5B, 9B, and 13B are expanded cross-sectional views of the central portion C of the lower guide support part 41 as seen from above. As shown in this expanded cross-sectional view, the first inner stopper 46 is an inclined stopper inclined in the X1 direction toward the front (Y1 direction), and the second inner stopper 48 is an inclined stopper inclined in the X2 direction toward the front (Y1 direction).

As shown in FIGS. 4 and 16, a roller guide part 49 is formed inside the lower guide support part 41 of the support part 40. The roller guide part 49 is a linear groove that is open to the lower surface 41a of the lower guide support part 41 and extends in the sliding direction (X1-X2 direction). Alternatively, it may be an elongated slot passing through the lower guide support part 41 in the top-bottom direction (Z1-Z2 direction). The roller guide part 49 is located rearward (Y2 direction) of the first guide part 43 and the second guide part 44 and is formed parallel to the linear grooves of both the first guide part 43 and the second guide part 44.

As shown in FIG. 2, FIG. 3, FIG. 7, and FIG. 11, a rail 50 is fixed to the upper portion of the support part 40. The rail 50 extends linearly in the sliding direction (X1-X2 direction). FIG. 17A shows a cross-sectional shape of the rail 50. In the cross-sectional view, the rail 50 is formed with a first rolling surface 51 inclined in both the front-rear direction (Y1-Y2 direction) and the top-bottom direction (Z1-Z2 direction), and a second rolling surface 52 inclined in both the front-rear direction and the top-bottom direction and intersecting with the first rolling surface 51 at an angle of less than 180 degrees. As shown in FIG. 17A, the surfaces of the outer roller 26 and the inner roller 27 provided on the rear door 20 and the outer roller 36 and the inner roller 37 provided on the front door 30 are a first tapered surface T1 and a second tapered surface T2, respectively, and both tapered surfaces T1 and T2 intersect at an angle of less than 180°.

FIG. 1, FIG. 2, FIG. 4, FIG. 6, FIG. 8, FIG. 10, and FIG. 12 show the sliding door device 10 assembled. In an assembling process, as shown in FIG. 16, the rear outer abutment 23 provided at the lower part of the rear door 20 is inserted into the groove of the first guide part 43, and the rear inner abutment 24 is inserted into the groove of the second guide part 44. The front outer abutment 33 provided at the lower part of the front door 30 is inserted into the groove of the second guide part 44, and the front inner abutment 34 is inserted into the groove of the first guide part 43. Along the first guide part 43 (within the first guide part 43), the front inner abutment 34 is positioned closer to the second direction (X2 direction) than the rear outer abutment 23, and along the second guide part 44 (within the second guide part 44), the front outer abutment 33 is positioned closer to the second direction than the rear inner abutment 24. As shown in FIG. 16, a support roller 38 provided at the lower part of the front door 30 is inserted into the roller guide part 49 formed in the lower guide support part 41.

As shown in FIG. 17B, the slide bracket 22 fixed to the lower part of the rear surface of the rear door 20 slidably abuts on the slide support surface 42 which is a forward-facing surface of the lower guide support part 41. The lower guide support part 41 is sandwiched from the front and rear by the slide bracket 22 and the rear outer abutment 23 and the rear inner abutment 24 inserted into the respective guide parts 43 and 44, so that the lower part of the rear door 20 is positioned in the front-rear direction (Y1-Y2 direction) with respect to the support part 40 and can slide. As shown in FIG. 17B, the front outer abutment 33 and the front inner abutment 34 are inserted into the guide parts 43 and 44, and the support roller 38 is inserted into the roller guide part 49, so that the lower part of the front door 30 is positioned in the front-rear direction (Y1-Y2 direction) with respect to the support part 40 and can slide.

As shown in FIGS. 2, 7, and 11, the outer roller 26 and the inner roller 27 provided on the rear door 20 and the outer roller 36 and the inner roller 37 provided on the front door 30 are arranged in a row in the right-left direction (X1-X2 direction) and supported on the rail 50 fixed to the support part 40 in a freely rollable manner. As shown in FIG. 17A, a first tapered surface T1 formed on each of the rollers 26, 27, 36, and 37 rolls on the first rolling surface 51 of the rail 50, and a second tapered surface T2 rolls on the second rolling surface 52. An abutting surface between the first tapered surface T1 and the first rolling surface 51 and an abutting surface between the second tapered surface T2 and the second rolling surface 52 form an angle of less than 180 degrees, and the abutting surfaces are not parallel in the front-rear direction (Y1-Y2 direction) and the top-bottom direction (Z1-Z2 direction), so that the upper portion of the rear door 20 and the upper portion of the front door 30 are positioned in the front-rear direction (Y1-Y2 direction) with respect to the support part 40 and can slide.

As shown in FIGS. 17A and 17B, the rear door 20 is positioned in the top-bottom direction (Z1-Z2 direction) with respect to the support part 40 by the lower slide bracket 22 and the upper outer roller 26 and inner roller 27. The front door 30 is positioned in the top-bottom direction (Z1-Z2 direction) with respect to the support part 40 by the outer support plate 32a and the inner support plate 32b (see FIG. 14) fixed to the lower part of the bracket 32, and the upper outer roller 36 and the inner roller 37.

As shown in FIG. 2, a rear drive mechanism 60 and a front drive mechanism 65 are provided behind the support part 40. In the rear drive mechanism 60, a motor 62 is fixed to a drive bracket 61 fixed to the support part 40, and power of the motor 62 is transmitted to a pinion gear 64 through a worm reduction mechanism 63 serving as a load deceleration mechanism. The pinion gear 64 meshes with the rack 29 fixed to the rear door 20. In the front drive mechanism 65, a motor 67 is fixed to a drive bracket 66 fixed to the support part 40, and power of the motor 67 is transmitted to a pinion gear 69 through a worm reduction mechanism 68 serving as a load deceleration mechanism. The pinion gear 69 meshes with the rack 39 fixed to the front door 30. Power of the motor 62 provided in the rear drive mechanism 60 and power of the motor 67 provided in the front drive mechanism 65 independently drive the rear door 20 and the front door 30 to slide in the right-left direction (X1-X2 direction).

### (CLOSED MODE)

FIGS. 1 to 5C are drawings illustrating the sliding door device 10 in a closed mode. As shown in FIGS. 1, 2, 3, and 4, in the sliding door device 10 in the closed mode, power of the motor 62 provided in the rear drive mechanism 60 is transmitted from the pinion gear 64 to the rack 29 to slide the rear door 20 in the first direction (X1 direction), and power of the motor 67 provided in the front drive mechanism 65 is transmitted from the pinion gear 69 to the rack 39 to slide the front door 30 in the second direction (X2 direction). As shown in FIG. 1, in the closed mode, the opening 3 of the housing 2 is closed by the rear door 20 and the front door 30.

FIG. 5A is a cross-sectional view illustrating a right-hand portion R shown in FIG. 3, taken along a line 5A-5A, FIG. 5B is a cross-sectional view illustrating a central portion C, taken along a line 5B-5B, and FIG. 5C is a cross-sectional view illustrating a left-hand portion L shown in FIG. 3, taken along a line 5C-5C. Although FIG. 3 does not show the first guide part 43 and the second guide part 44 of the lower guide support part 41, FIGS. 5A, 5B, and 5C show cross-sectional shapes of the first guide part 43 and the second guide part 44. In the closed mode, the motor 62 provided in the rear drive mechanism 60 is powered to press the rear outer abutment 23 of the rear door 20 against the first outer stopper 45, which is the X1 side end of the first guide part 43, as shown in FIG. 5A, and the rear inner abutment 24 of the rear door 20 against the second inner stopper 48, which is the X1 side end of the second guide part 44, as shown in FIG. 5B. When the motor 62 stops in this state, the load of the worm reduction mechanism 63, which is a load deceleration mechanism, presses the rear outer abutment 23 against the first outer stopper 45 and maintains the state in which the rear inner abutment 24 is pressed against the second inner stopper 48. As shown in FIG. 5A, the outwardly inclined part 23a of the rear outer abutment 23 is pressed against the first outer stopper 45, which is an inclined stopper, so that the rear outer abutment 23 is restrained in the front-rear direction (Y1-Y2 direction) within the first guide part 43. As shown in FIG. 5B, the outwardly inclined part 24a of the rear inner abutment 24 is pressed against the second inner stopper 48, which is an inclined stopper, so that the rear inner abutment 24 is restrained in the front-rear direction (Y1-Y2 direction) within the second guide part 44.

In the closed mode, power of the motor 67 provided in the front drive mechanism 65 presses the front outer abutment 33 of the front door 30 against the second outer stopper 47, which is the end part on the X2 side of the second guide part 44, as shown in FIG. 5C, and presses the front inner abutment 34 of the front door 30 against the first inner stopper 46, which is the end part on the X2 side of the first guide part 43, as shown in FIG. 5B. When the motor 67 stops in this state, the load of the worm reduction mechanism 68, which is a load deceleration mechanism, presses the front outer abutment 33 against the second outer stopper 47, so that the state in which the front inner abutment 34 is pressed against the first inner stopper 46 is maintained. As shown in FIG. 5C, the outwardly inclined part 33a of the front outer abutment 33 is pressed against the second outer stopper 47, which is an inclined stopper, so that the front outer abutment 33 is restrained in the front-rear direction (Y1-Y2 direction) within the second guide part 44. As shown in FIG. 5B, the outwardly inclined part 34a of the front inner abutment 34 is pressed against the first inner stopper 46, which is an inclined stopper, so that the front inner abutment 34 is restrained in the front-rear direction (Y1-Y2 direction) within the first guide part 43.

As shown in FIGS. 5A, 5B, and 5C, the rear outer abutment 23 and the rear inner abutment 24 are restrained in the front-rear direction within the guide parts 43 and 44, and as shown in FIG. 17A, the first tapered surface T1 and the second tapered surface T2 of the outer roller 26 and the inner roller 27 are restrained in the front-rear and top-bottom directions on the rail 50. Therefore, in the closed mode, the rear door 20 can maintain the closed state without causing any rattling with respect to the support part 40. Similarly, the front outer abutment 33 and the front inner abutment 34 are restrained within the guide parts 43 and 44, and the outer roller 36 and the inner roller 37 are held on the rail 50, so that the front door 30 can maintain the closed state without causing any rattling with respect to the support part 40.

### (FIRST OPEN MODE)

FIGS. 6 to 9B show the first open mode. As shown in FIGS. 6, 7 and 8, in an operation of transition to the first open mode, the motor 67 of the front drive mechanism 65 is started in a state where the rear door 20 has been moved in the first direction (X1 direction) and is held by the support part 40 in the closed mode, so that the front door 30 is moved in the first direction (X1 direction) and overlaps the front of the rear door 20. As shown in FIG. 6, in the first open mode, half of the opening 3 of the housing 2 in the second direction (X2 direction) is opened.

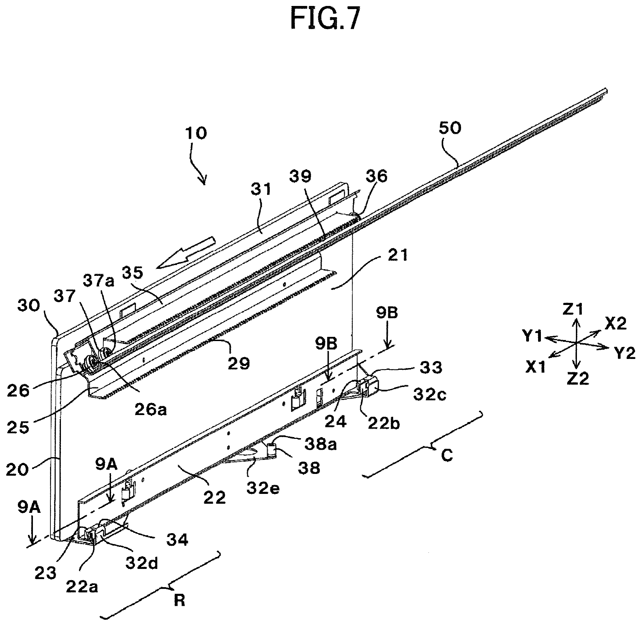

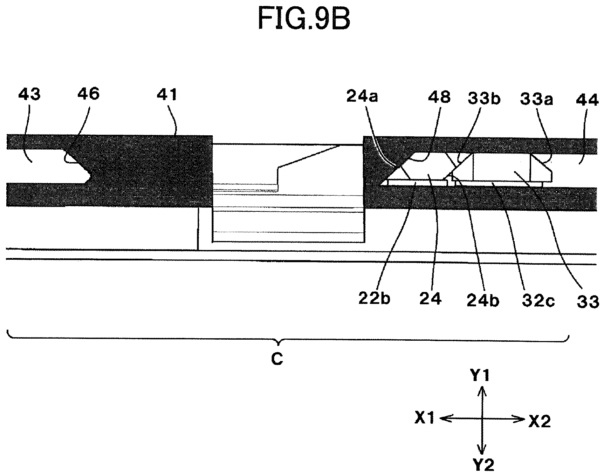

FIG. 9A is a cross-sectional view illustrating a right-hand portion R shown in FIG. 7, taken along a line 9A-9A, and FIG. 9B is a cross-sectional view illustrating a central portion C, taken along a line 9B-9B. Although FIG. 7 does not show the first guide part 43 and the second guide part 44 of the lower guide support part 41, FIGS. 9A and 9B show cross-sectional shapes of the first guide part 43 and the second guide part 44. As shown in FIG. 9A, in the first open mode, the rear outer abutment 23 of the rear door 20 is pressed (kept pressed) against the first outer stopper 45, and the front inner abutment 34 of the front door 30 is pressed against the rear outer abutment 23 in the first direction (X1 direction). Further, as shown in FIG. 9B, the rear inner abutment 24 of the rear door 20 is pressed (kept pressed) against the second inner stopper 48, and the front outer abutment 33 of the front door 30 is pressed against the rear inner abutment 24 in the first direction (X1 direction). When the motor 67 stops in this state, the front inner abutment 34 is pressed against the rear outer abutment 23 due to the load of the worm reduction mechanism 68, which serves as a load deceleration mechanism, and the front outer abutment 33 is maintained in a state of being pressed against the rear inner abutment 24.

As shown in FIG. 9A, the inwardly inclined part 34b of the front inner abutment 34 is pressed against the inwardly inclined part 23b of the rear outer abutment 23, and as shown in FIG. 9B, the inwardly inclined part 33b of the front outer abutment 33 is pressed against the inwardly inclined part 24b of the rear inner abutment 24, so that the front door 30 moved to the open state can be maintained in a state of being restrained in the front-rear direction with respect to the support part 40. Therefore, it is possible to prevent the rear door 20 and the front door 30 from rattling in the first open mode.

### (SECOND OPEN MODE)

FIGS. 10 to 13B show the second open mode. As shown in FIGS. 10, 11 and 12, in an operation of transition to the second open mode, the motor 62 of the rear drive mechanism 60 is started in a state where the front door 30 has been moved in the second direction (X2 direction) and is held by the support part 40 in the closed mode, so that the rear door 20 is moved in the second direction (X2 direction) and overlaps the rear door 20 behind the front door 30. As shown in FIG. 10, in the second open mode, half of the opening 3 of the housing 2 in the first direction (X1 direction) is opened.

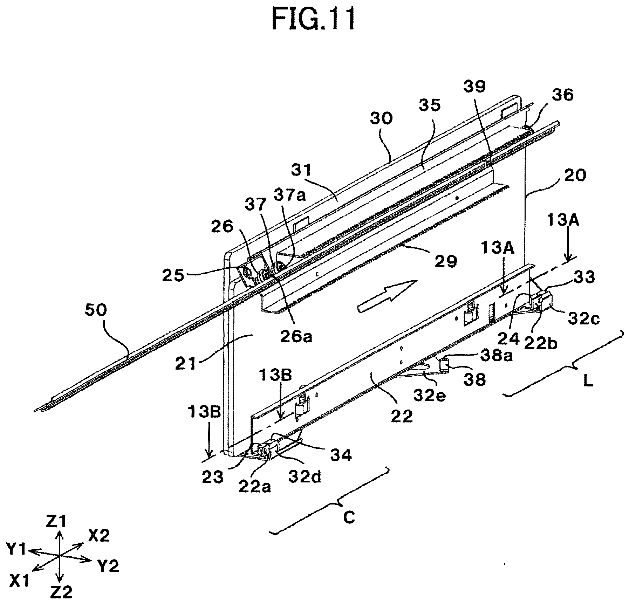

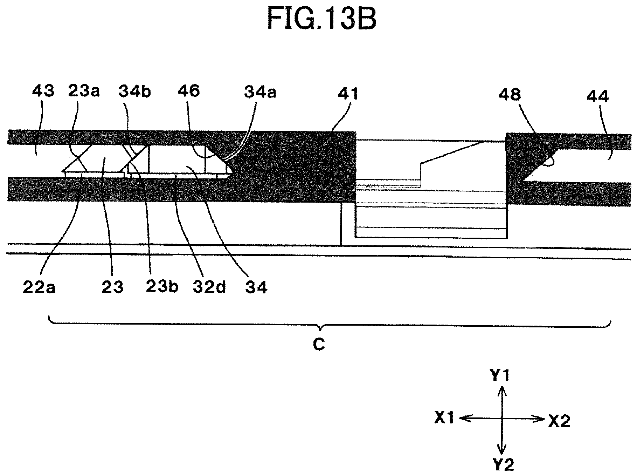

FIG. 13A is a cross-sectional view illustrating a left-hand portion L shown in FIG. 11, taken along a line 13A-13A, and FIG. 13B is a cross-sectional view illustrating a central portion C, taken along a line 13B-13B. FIG. 11 does not show the first guide part 43 and the second guide part 44 of the lower guide support part 41, but FIGS. 13A and 13B show cross-sectional shapes of the first guide part 43 and the second guide part 44. As shown in FIG. 13A, in the second open mode, the front outer abutment 33 of the front door 30 is pressed (kept pressed) against the second outer stopper 47, and the rear inner abutment 24 of the rear door 20 is pressed against the front outer abutment 33 in the second direction (X2 direction). Further, as shown in FIG. 13B, the front inner abutment 34 of the front door 30 is pressed (kept pressed) against the first inner stopper 46, and the rear outer abutment 23 of the rear door 20 is pressed against the front inner abutment 34 in the second direction (X2 direction). When the motor 62 is stopped in this state, the rear inner abutment 24 is pressed against the front outer abutment 33 by a load of the worm reduction mechanism 63, which is a load deceleration mechanism, and the rear outer abutment 23 is kept pressed against the front inner abutment 34.

As shown in FIG. 13A, the inwardly inclined part 24b of the rear inner abutment 24 is pressed against the inwardly inclined part 33b of the front outer abutment 33, and as shown in FIG. 13B, the inwardly inclined part 23b of the rear outer abutment 23 is pressed against the inwardly inclined part 34b of the front inner abutment 34, so that the rear door 20 moved to the open state can maintain a state of being restrained in the front-rear direction with respect to the support part 40. Therefore, it is possible to prevent the rear door 20 and the front door 30 from rattling in the second open mode.

In the sliding door device 10 according to the first embodiment, as shown in FIGS. 5A and 9A, the outwardly inclined part 23a is formed in the rear outer abutment 23. Although the first outer stopper 45 is an inclined stopper, an inclined part may be formed in at least one of the rear outer abutment 23 and the first outer stopper 45. That is, the rear outer abutment 23 and the first outer stopper 45 may abut through the inclined part. This is also the case between the first inner stopper 46, the second outer stopper 47, and the second inner stopper 48 and the other abutments 24, 33, and 34, respectively. As shown in FIG. 9A, the inwardly inclined part 23b is formed in the rear outer abutment 23, and the inwardly inclined part 34b is formed in the front inner abutment 34, but an inclined part may be formed in at least one of the rear outer abutment 23 and the front inner abutment 34. That is, the rear outer abutment 23 and the front inner abutment 34 may abut through the inclined part. The same applies to the abutting surface between the front outer abutment 33 and the rear inner abutment 24 shown in FIG. 13A, as well as to the abutting surfaces between other abutments shown in FIGS. 9B and 13B.

In the sliding door device 10 of the first embodiment, the first guide part 43 and the second guide part 44 are arranged in the same straight line extending in the sliding direction (X1-X2 direction) on the lower surface 41a of the lower guide support part 41 of the support part 40, the rear outer abutment 23 provided on the rear door 20 and the front inner abutment 34 provided on the front door 30 move along the same first guide part 43, and the rear inner abutment 24 provided on the rear door 20 and the front outer abutment 33 provided on the front door 30 move along the same second guide part 44. Therefore, as shown in FIGS. 4, 8, and 12, the size of the mechanism for guiding the rear door 20 and the front door 30 in the front-rear direction (Y1-Y2 direction) can be reduced, and the sliding door device 10 can be configured to be thin. In addition, the rear door 20 and the front door 30 can be held without causing rattling in any of the closed mode, the first open mode, and the second open mode.

### <SECOND EMBODIMENT>

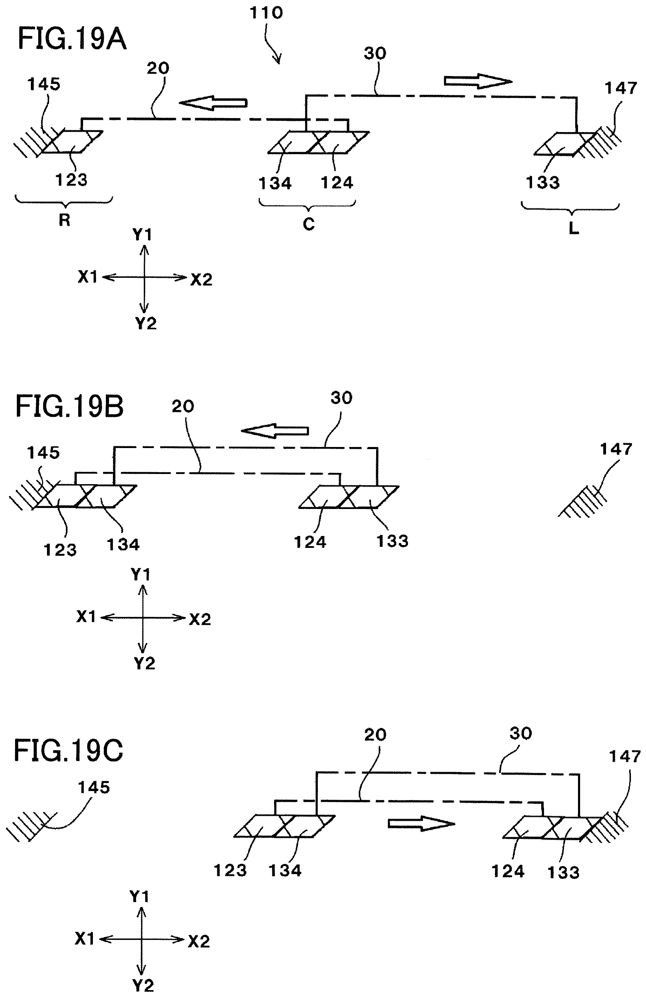

FIGS. 19A, 19B and 19C schematically show only a main part of the sliding door device 110 according to the second embodiment of the present disclosure. In the sliding door device 110, one guide part (straight groove or elongated slot) extending in the right-left direction (X1-X2 direction) is formed in the lower guide support part 41 of the support part 40, and all the abutments including a rear outer abutment 123 and a rear inner abutment 124 provided in the rear door 20 and a front outer abutment 133 and a front inner abutment 134 provided in the front door 30 are slidably inserted into the same guide part. The front inner abutment 134 is located on the second direction (X2 direction) side of the rear outer abutment 123, and the front outer abutment 133 is located on the second direction (X2 direction) side of the rear inner abutment 124. The shapes of the rear outer abutment 123 and the rear inner abutment 124, and the front outer abutment 133 and the front inner abutment 134 are the same as those of the rear outer abutment 23 and the rear inner abutment 24 of the first embodiment shown in FIG. 18A.

FIG. 19A shows a sliding door device 110 in a closed mode. The rear door 20 is moved in the first direction (X1 direction), and the rear outer abutment 123 is pressed against a first outer stopper 145 in the first direction (X1 direction) through an inclined part at the right-hand portion R. The front door 30 is moved in the second direction (X2 direction), and the front outer abutment 133 is pressed against a second outer stopper 147 in the second direction (X2 direction) through an inclined part at the left-hand portion L. At the central portion C, the rear inner abutment 124 receiving a moving force in the X1 direction and the front inner abutment 134 receiving a moving force in the X2 direction are pressed against each other through an inclined part in the guide part. Thus, the rear door 20 and the front door 30 in the closed mode are held without causing rattling.

In the first open mode shown in FIG. 19B, the front door 30 is moved in the first direction (X1 direction) while the rear door 20 is maintained in the closed state of sliding in the first direction (X1 direction). The front inner abutment 134 is pressed against the rear outer abutment 123 in the first direction (X1 direction) through an inclined part, and the front outer abutment 133 is pressed against the rear inner abutment 124 in the first direction (X1 direction) through an inclined part.

In the second open mode shown in FIG. 19C, the rear door 20 is moved in the second direction (X2 direction) while the front door 30 is maintained in the closed state of sliding in the second direction (X2 direction) . The rear inner abutment 124 is pressed against the front outer abutment 133 in the second direction (X2 direction) via the inclined part, and the rear outer abutment 123 is pressed against the front inner abutment 134 in the second direction (X2 direction) via the inclined part. Even in the first closed mode and the second closed mode, the rear door 20 and the front door 30 are held without causing the support part 40 to rattle.

### <THIRD EMBODIMENT>

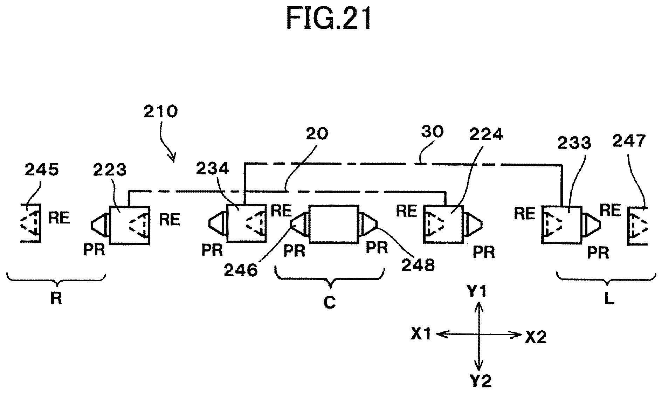

FIG. 21 schematically shows only a main part of a sliding door device 210 according to the third embodiment. In this sliding door device 210, a first outer stopper 245 is provided in a right-hand portion R, a second outer stopper 247 is provided in a left-hand portion L, and a first inner stopper 246 and a second inner stopper 248 are provided in a central portion C. The first outer stopper 245 and the first inner stopper 246 face each other with a distance in the sliding direction (X1-X2 direction) in the first guide part, and the second outer stopper 247 and the second inner stopper 248 face each other with a distance in the sliding direction in the second guide part. Then, a rear outer abutment 223 provided in the rear door 20 and a front inner abutment 234 provided in the front door 30 move along the first guide part, and a rear inner abutment 224 provided in the rear door 20 and a front outer abutment 233 provided in the front door 30 move along the second guide part.

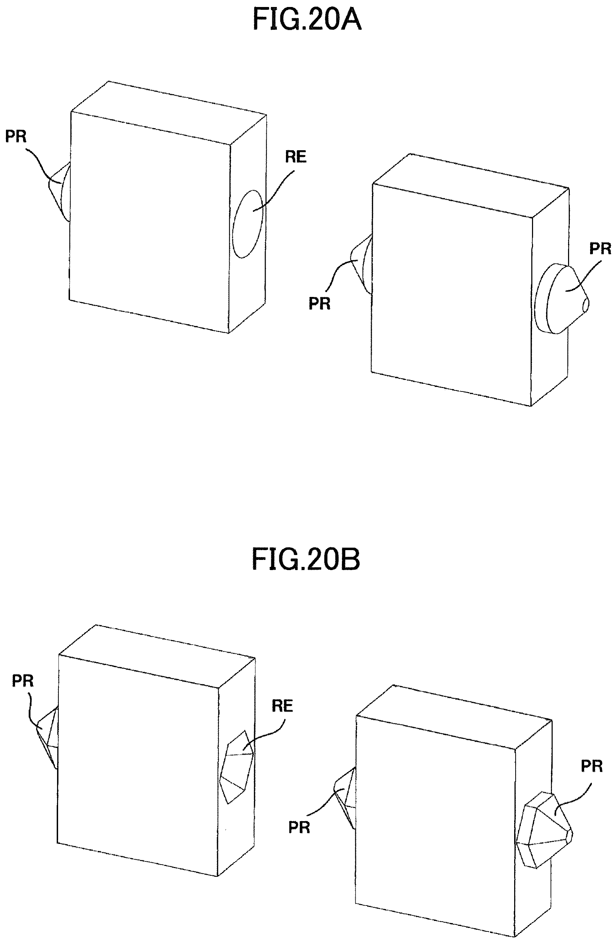

In the sliding door device 210, the first outer stopper 245 and the second outer stopper 247 have recesses RE, and the first inner stopper 246 and the second inner stopper 248 have projections PR. Each of the abutments 223, 224, 233, and 234 has a projection PR and a recess RE. In an example shown in FIG. 20A, the projection PR and the recess RE have a circular tapered cross section, and in the example shown in FIG. 20B, the projection PR and the recess RE have a rectangular tapered cross section.

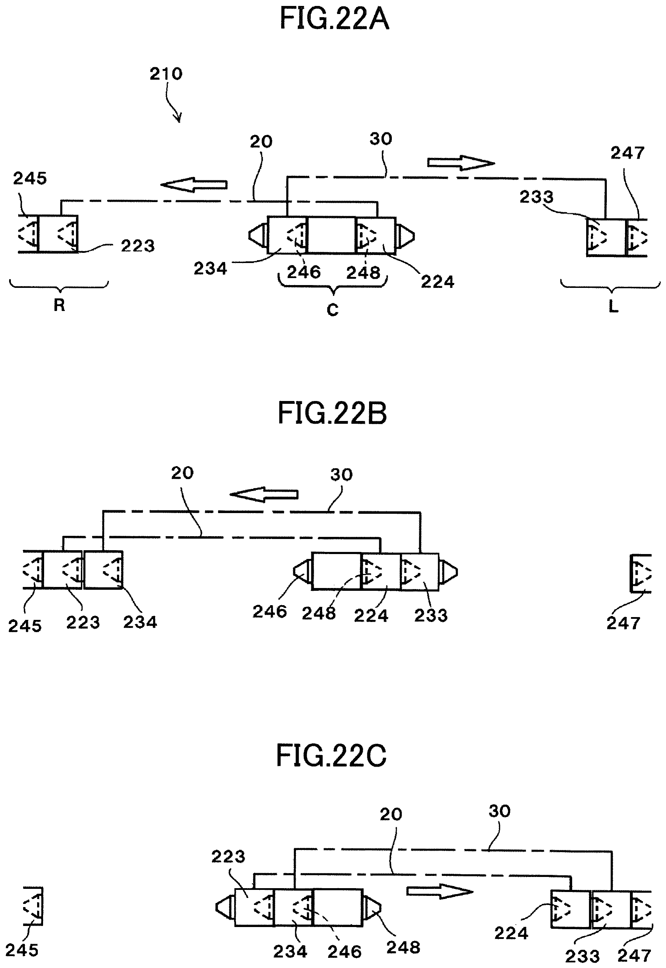

FIG. 22A shows the sliding door device 210 according to the third embodiment in a closed mode. FIG. 22B shows a first open mode and FIG. 22C shows a second open mode. In each mode, an operation of the rear door 20 and the front door 30, abutting between the respective stoppers and the respective moving parts, and abutting between the moving parts are the same as those of the sliding door device 10 according to the first embodiment. In the sliding door device 210 according to the third embodiment, the respective stoppers and the respective moving parts are recess-projection fitted by the tapered projections PR and the recesses RE, and the respective moving parts are also recess-projection fitted by the tapered projections PR and the recesses RE. Therefore, in each mode, the rear door 20 and the front door 30 are positioned in multiple directions including the front-rear direction (Y1-Y2 direction) and the top-bottom direction (Z1-Z2 direction) without causing rattling.

### <FOURTH EMBODIMENT>

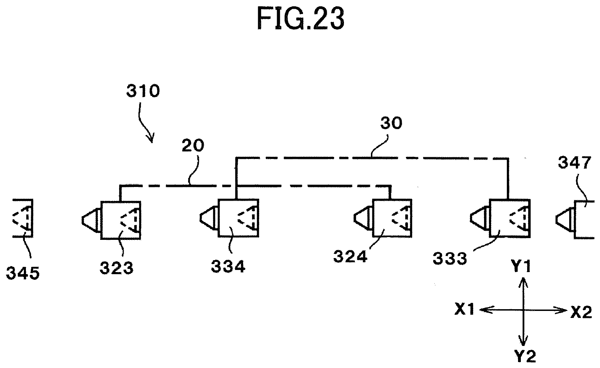

FIG. 23 is a drawing illustrating a sliding door device 310 according to a fourth embodiment. Similar to the sliding door device 110 according to the second embodiment shown in FIG. 19, this sliding door device 310 is provided with only one guide part, a first outer stopper 345 is provided at an end part of the guide part on the X1 side, and a second outer stopper 347 is provided at an end part of the guide part on the X2 side. The first outer stopper 345 has a tapered recess RE, and the second outer stopper 347 has a tapered projection PR. The rear door 20 has a rear outer abutment 323 and a rear inner abutment 324, and the front door 30 has a front outer abutment 333 and a front inner abutment 334. Each of the abutments 323, 324, 333, and 334 has a tapered projection PR and a recess RE. Each of the abutments 323, 324, 333, and 334 moves along one common guide part.

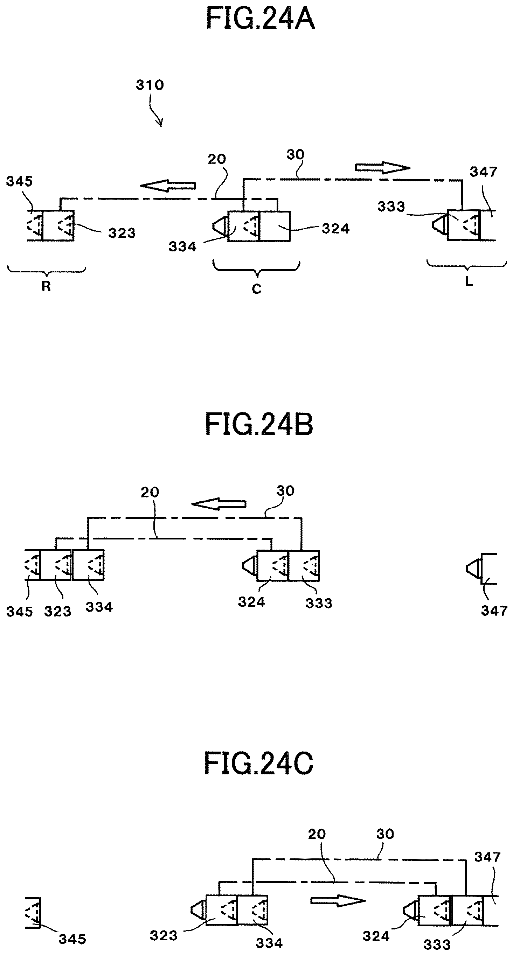

FIG. 24A shows the sliding door device 310 according to the fourth embodiment in a closed mode. FIG. 24B shows a first open mode and FIG. 24C shows a second open mode. Pressure contact operation between the stopper and the abutment and pressure contact operation between the abutments in each mode are the same as those of the sliding door device 110 of the second embodiment shown in FIG. 19. In both modes, the stopper part and the respective moving parts are recess-projection fitted by the tapered projection PR and the recess RE, and the respective moving parts are recess-projection fitted by the tapered projection PR and the recess RE. Therefore, in each mode, the rear door 20 and the front door 30 are positioned without rattling in multiple directions including the front-rear direction (Y1-Y2 direction) and the top-bottom direction (Z1-Z2 direction).

## Claims

1. A sliding door device comprising a support part provided with a rear door configured to slide, a front door configured to slide in front of the rear door, and a drive mechanism configured to independently slide the rear door and the front door, wherein:
the drive mechanism is configured to set a closed mode in which the rear door moves in a first direction and the front door moves in a second direction, which is opposite to the first direction, a first open mode in which the front door overlaps the rear door that has moved in the first direction, and a second open mode in which the rear door overlaps the front door that has moved in the second direction;
the rear door is provided with a rear outer abutment and a rear inner abutment spaced apart in a sliding direction;
the front door is provided with a front outer abutment and a front inner abutment spaced apart in the sliding direction;
the support part is provided with one or more guide parts extending in the sliding direction;
the rear outer abutment and the front inner abutment are configured to move along a same guide part among the one or more guide parts; and
the front outer abutment and the rear inner abutment are configured to move along a same guide part among the one or more guide parts.

2. The sliding door device according to claim 1, wherein:
on the guide part along which the rear outer abutment and the front inner abutment are configured to move, the front inner abutment is located in the second direction relative to the rear outer abutment; and
on the guide part along which the front outer abutment and the rear inner abutment are configured to move, the front outer abutment is located in the second direction relative to the rear inner abutment.

3. The sliding door device according to claim 2, wherein:
the support part is provided with a first outer stopper and a second outer stopper spaced apart in the sliding direction; and
in the closed mode, the rear outer abutment is pressed against the first outer stopper, and the front outer abutment is pressed against the second outer stopper.

4. The sliding door device according to claim 3, wherein:
in the first open mode, the front outer abutment is pressed against the rear inner abutment; and
in the second open mode, the rear outer abutment is pressed against the front inner abutment.

5. The sliding door device according to claim 4, wherein:
in the first open mode, the rear outer abutment is pressed against the first outer stopper, and the front inner abutment is pressed against the rear outer abutment; and
in the second open mode, the front outer abutment is pressed against the second outer stopper, and the rear inner abutment is pressed against the front outer abutment.

6. The sliding door device according to one of claims 1 to 5, wherein:
the one or more guide parts include a first guide part and a second guide part;
the rear outer abutment and the front inner abutment are configured to move along the first guide part; and
the front outer abutment and the rear inner abutment are configured to move along the second guide part.

7. The sliding door device according to one of claims 3 to 6, wherein:
the one or more guide parts include a first guide part and a second guide part;
the rear outer abutment and the front inner abutment are configured to move along the first guide part;
the front outer abutment and the rear inner abutment are configured to move along the second guide part;
the first guide part is provided with the first outer stopper and a first inner stopper spaced apart in the sliding direction;
the second guide part is provided with the second outer stopper and a second inner stopper spaced apart in the sliding direction; and
in the closed mode, the rear inner abutment is pressed against the second inner stopper, and the front inner abutment is pressed against the first inner stopper.

8. The sliding door device according to one of claims 4 to 7, wherein:
the one or more guide parts include a first guide part and a second guide part;
the rear outer abutment and the front inner abutment are configured to move along the first guide part;
the front outer abutment and the rear inner abutment are configured to move along the second guide part;
the first guide part is provided with the first outer stopper and a first inner stopper spaced apart in the sliding direction;
the second guide part is provided with the second outer stopper and a second inner stopper spaced apart in the sliding direction;
in the first open mode, the rear inner abutment is pressed against the second inner stopper, and the front outer abutment is pressed against the rear inner abutment; and
in the second open mode, the front inner abutment is pressed against the first inner stopper, and the rear outer abutment is pressed against the front inner abutment.

9. The sliding door device according to one of claims 6 to 8, wherein the first guide part and the second guide part are located on a same line extending along the sliding direction.

10. The sliding door device according to one of claims 1 to 9, wherein the guide part along which the rear outer abutment and the front inner abutment are configured to move is the same as the guide part along which the front outer abutment and the rear inner abutment are configured to move.

11. The sliding door device according to one of claims 3 to 10, wherein the first outer stopper and the second outer stopper are inclined stoppers.

12. The sliding door device according to one of claims 7 to 11, wherein the first inner stopper and the second inner stopper are inclined stoppers.

13. The sliding door device according to one of claims 4 to 12, wherein:
the front outer abutment is configured to be pressed against the rear inner abutment via an inclined part; and
the rear outer abutment is configured to be pressed against the front inner abutment via an inclined part.

14. The sliding door device according to one of claims 5 to 13, wherein:
the front inner abutment is configured to be pressed against the rear outer abutment via an inclined part; and
the rear inner abutment is configured to be pressed against the front outer abutment via an inclined part.
